# EUROPEAN PATENT APPLICATION

(11) **EP 1 374 668 A1**
(43) Date of publication of application: **02.01.2004**
(21) Application number: 03076913.7
(22) Date of filing: 19.06.2003
(51) Int. Cl.: A01G 9/24

(54) **Rail system**

(30) Priority: 19.06.2002 NL 1020902
(71) Applicant: W/M Systems B.V., 2587 TX Den Haag (NL)
(72) Inventor: Jansen, Wilhelmus Henricus Antonius, 1619 BZ Andijk (NL)
(74) Representative: Jorritsma, Ruurd

(57) **Abstract**

Rail system (1) for moving items such as roll containers along it. The rails (2,3) are positioned some distance above the substrate and are supported on the substrate by means of uprights (4) that are placed in feet (6) placed on the substrate. These feet (6) consist of a plastic part, the underside of which is flat or hollow so as to bear on the substrate. The surface (12) facing the rail (3) is provided with reinforcing ribs (11) that extend from the accommodation for the upright (4). There is preferably also a vertically extending rib (13) around the periphery.

## Description

The present invention relates to a rail system for moving items such as roll containers along it, comprising a rail provided with a number of supports arranged a regular distance apart, each support comprising an upright and a plastic foot, each upright being provided at one end with a support for said rail and being provided at the other end with a connection to said foot, said foot being provided with an essentially flat bearing surface for engaging on a substrate and a central accommodation for said upright.

As well as for roll containers, rail systems can also be used for other mobile units, such as vehicles and other transport means and roll troughs. Rail systems of this type are used mainly in horticulture, such as greenhouse horticulture and tree nurseries where heavy work can be avoided and favourable ergonomic working conditions can be obtained by transport with the aid of units, such as trucks and/or containers. In this context, for example, plants are placed in roll containers and these are some distance above the floor, as a result of which working conditions improve. The simplest embodiment of the rail consists of round steel (51 mm) tubes that can serve as heating pipes at the same time. Nowadays, rails of a different construction are being used to an ever increasing extent. It is always necessary to support such rails on the floor of the greenhouse, or on the outdoor land if these rails are used outdoors. In the state of the art, so-called supports are used for such support. These supports consists of vertical uprights that are placed in a foot. This placing can be effected in various ways. In a first variant concrete mortar is poured into a hole in the substrate and the uprights are then placed in the concrete before this has set.

In another variant there is a metal footplate to which the uprights are fixed. According to a further proposal, the upright is fixed in a concrete block that is then placed on the substrate.

Another widely used method of support is to place the uprights on a concrete tile. This concrete tile can be provided with a central opening through it. There can be adjustment and fixing means on the upright to fix the position of the upright with respect to the foot.

It is important to be able to construct such rail systems rapidly and economically, appreciable accuracy nevertheless being required to position the uprights precisely with respect to the rail system. This plays a role in particular if there is a large number of parallel rails for moving items along these. With this arrangement the gauge between adjacent rails must always be accurately maintained.

In the state of the art, when a tile is used as the foot, a number of tiles are first placed on the substrate and the uprights are then installed, followed by positioning of the rail. However, accurate positioning of the tile provided with a central opening or of an upright provided with a concrete block constitutes a problem. After all, the weight of the foot in concrete is approximately 25 kg. Moreover, it is difficult for the person who is positioning the tiles or concrete feet easily to carry a number of such parts at the same time. For this purpose either a transport truck or the like is required, or it is necessary to walk backwards and forwards from a central dump a number of times. In the case of the construction with a central opening for accommodating the upright there is also the problem of appreciable play of the upright with respect to the opening. However, it is not possible to fix the dimensions of such an opening precisely because this opening is made when the concrete is poured. Serious disadvantages are experienced because of the high weight of the concrete material, not only when constructing such a system but also during its demolition. The removal costs are high, whilst, moreover, it is not possible or hardly possible to use the material and this has to be dumped as rubble. The weight and possible sharp edges also constitute a risk factor for the persons charged with laying such tiles.

US-A 5 906 341 discloses a support for supporting pipes running on a roof, such as pipes for an air conditioning system. In this case a foot is used that has a flat baseplate through which screws are inserted by fixing these to the roof surface.

In the case of use in greenhouses and the like it is not easily possible to provide such a fixing. After all, in greenhouses the requirement is often imposed that there is a liquid-tight covering and liquid-tightness can no longer be guaranteed if holes are made for bolts.

Moreover, it has been found that a relatively large amount of plastic material is needed for such a baseplate in order to provide adequate strength.

The aim of the present invention is to avoid the disadvantages described above and to provide a rail system that can be installed easily with high accuracy and that can be removed easily. Moreover, an adequate load-bearing capacity can be provided in order to offer adequate support even on soft substrates.

This aim is realised with a rail system as described above in that said foot is provided with a peripheral rib that in the use position extends essentially vertically upwards from said support surface.

According to the present invention, the foot is made of plastic. Surprisingly, it has been found that with correct sizing and correct choice of the plastic material, adequate strength can be obtained. As a result of the use of the peripheral rib, a cavity is obtained that can optionally be filled with ballast. Consequently it is not necessary to provide special fixing to the substrate such as by means of bolts. As a result of the use of the peripheral rib, the strength of the foot increases appreciably, so that less material can suffice for the product. Consequently the foot can be of more lightweight construction and in the case of injection moulding the cycle time can be appreciably shortened.

According to an advantageous embodiment of the invention, the plastic material comprises at least partially regenerated plastic material.

In order to increase the strength of the foot, the latter can be provided with a number of ribs extending from the central accommodation to the periphery of the foot. The height of these ribs preferably decreases from the central accommodation towards the peripheral edge. The height of the central accommodation can be appreciable without the weight of the foot according to the present invention increasing. A value of 5 - 25 cm may be mentioned by way of example.

By using a plastic material, the weight can be appreciably reduced, so that the person who is installing the feet and uprights is able to carry a number of such feet to the desired installation location at the same time.

As a result of the relatively low weight, handling is simplified and the position can easily be shifted even after placing on the substrate. As a result of the use of plastic injection moulding and vacuum moulding techniques it is possible to make a very accurate choice for the dimensions of the accommodation so that the upright accurately fits in this accommodation, optionally with slight clamping. Plastic is reusable. Furthermore, there is no risk of the user injuring him- or herself.

It is possible to provide the foot with or without a hole extending completely through it. In the embodiment with a hole extending completely through it, the upright must, of course, be provided with a stop in order to bear on the top of the accommodation. In an embodiment without a hole completely through it, such a stop does not have to be used because the base of the accommodation can serve as support for the upright.

According to a further advantageous embodiment of the invention, the peripheral rib is joined to the ribs extending from the central accommodation.

According to a further advantageous embodiment, there are adjustment means in the central accommodation for the upright so as to adjust said upright. By this means it is possible to compensate for skewing of the foot. Furthermore, it is possible to correct slight shifts with respect to the "ideal line". Such an adjustment facility can be implemented using a single eccentric sleeve. However, this means that when such a sleeve is turned to move the upright in, for example, the lateral direction, movement in a direction perpendicular thereto will also take place. This can be corrected for by also moving the foot during the correction. If this is undesired, it is preferred to construct the adjustment means with two eccentric sleeves. In this way movement exclusively in one direction of the upright can be achieved.

In order to optimise engagement with the base surface of the support surface of the foot, the latter is preferably provided with a protrusion extending downwards in the use position. This protrusion is preferably made rounded, so that any floor covering or the like that may be present is not damaged. A peripheral rib, and more particularly a peripheral rib that is in the extension of the rib extending upwards, which has been described above, may be mentioned by way of example.

The foot described above can be produced from any material known in the state of the art. ABS, polypropene and polyethene may be mentioned as examples. Recycled material is preferably used.

Apart from supporting the upright with the aid of a stop surface, it is also possible to provide clamping between central accommodation and upright. For this purpose the hole in the accommodation for receiving the upright can be made such that it tapers conically towards the substrate.

According to an advantageous embodiment of the present invention, the support surface of the foot is made "hollow". That is to say, when placed on a flat surface the central part is some distance above the flat surface, whilst the peripheral edge of the foot bears on said flat surface. The distance is preferably less than 5 cm and more particularly approximately 1 cm. This concavity can be produced in any imaginable manner. As a result of the concavity made, in the event of elastic deformation as a consequence of the vertical point loading produced centrally by the upright, the foot is able to transfer this load to the substrate over a larger surface area and more particularly close to the outer edge of its support surface. As a result of this concavity, in the event of a subsiding substrate this load can be taken up over a larger surface area, and more particularly close to the outer edge of the support surface of the foot. In both cases this is beneficial for the stability against tipping over when horizontal loading is applied to the rail system bearing on the foot.

The invention will be explained in more detail below with reference to an illustrative embodiment shown in the drawing.

### In the drawing:

Fig. 1 shows, diagrammatically, a perspective view of a greenhouse provided with rail systems;
Fig. 2 shows the various components from which the supports are composed,
Fig. 3 shows a variant of the foot according to Fig. 2 used with the rail system,
Fig. 4 shows a further embodiment of the support according to the present invention with simple adjustment means and
Fig. 5 shows an embodiment according to Fig. 4 with dual adjustment means.

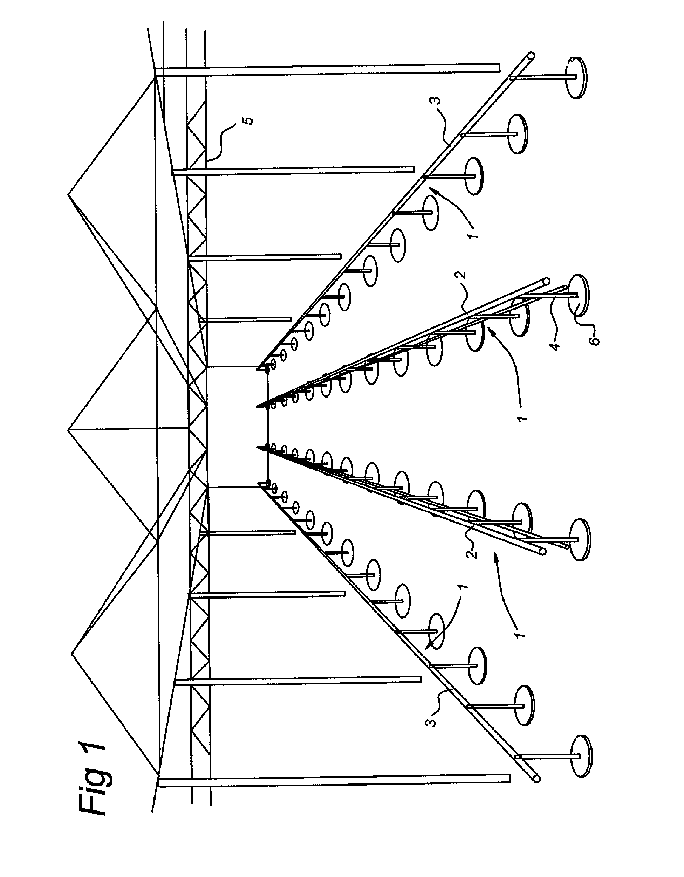

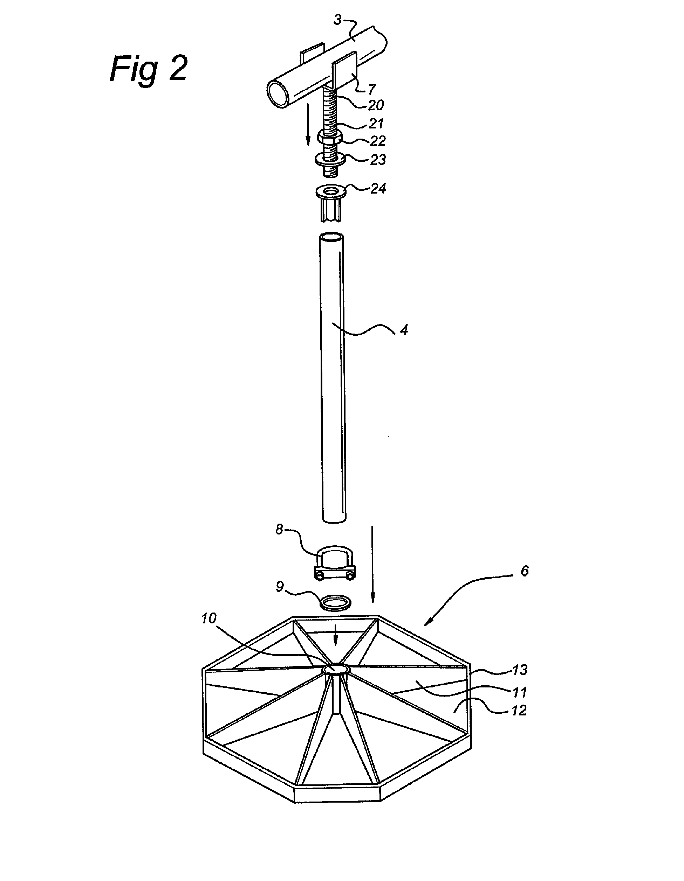

In Fig. 1 a rail system consisting of rails 2 and 3 is indicated by 1. These rails can be used, for example, for carrying a roll pallet, which is not shown, or another transport unit in a greenhouse. This greenhouse is indicated in its entirety by 5. Each of the rails is supported by a number of supports, each consisting of an upright 4 and a foot 6. Details of these can be seen from Fig. 2. Each upright 4 is provided at the top with a support 7 for supporting the rail 3 concerned. In the example, this support 7 is shown as a separate U-shaped part, but it must be understood that other constructions are also possible. There is an adjustment mechanism between upright 4 and support 7. Support 7 is provided with a stud 20 with thread 21 over which an adjusting nut 22 can be moved. A plastic plug 24 is pushed into the end of upright 4 and there is a support ring 23 underneath nut 20. The height of support 7 with respect to upright 4 is adjusted by adjusting nut 22. This upright is an essentially vertical tube, which is provided close to the bottom end with a clamp 8 and a stop ring 9 that can be slid over the tube but not over the clamp 8 and is used in the case of heavier loads. The foot according to the invention is indicated in its entirety by 6. This consists of a plastic part that has been produced by injection moulding. The support surface is indicated by 12 and this is essentially flat so as to bear on the substrate. According to a particular embodiment, the support surface (that is to say the underside) is made somewhat hollow, that is to say the centre is somewhat higher than the outer periphery with respect to the substrate. It has been found that a more stable positioning can be obtained in this way. There is a peripheral rib 13 close to the periphery. Radial ribs 11 extend from the peripheral rib 13 to a central accommodation 10. This central accommodation is provided with a cylindrical opening and passes completely through at the bottom (not visible). That is to say, upright 4 can be accommodated within the central opening with a tight fit and by clamping clamp 8 on upright 4 the height position of the upright 4 relative to the top of the central accommodation 10 can be determined, for example by the stop ring 9.

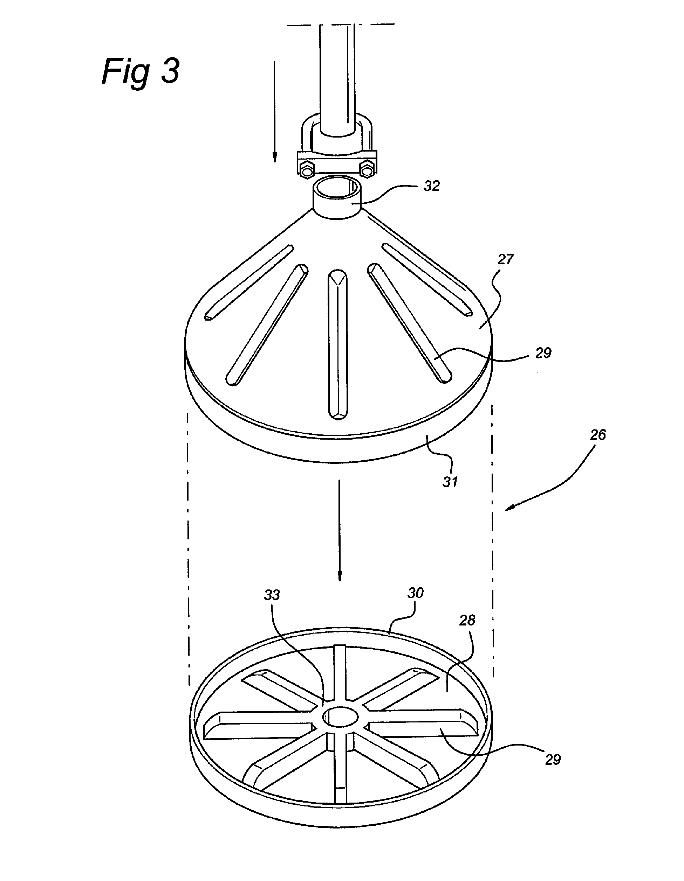

A variant of the construction shown in Fig. 2 and more particularly a variant of the foot 6 is shown in Fig. 3. In Fig. 3 this foot is indicated in its entirety by 26 and consists of a top part 27 and bottom part 28. The bottom part 28 is provided with ribs 29 and top part 27 is likewise provided with ribs indicated by 29. Both the top part 27 and the bottom part 28 are provided with a peripheral rim 30, 31, respectively, which fit into one another during assembly. The construction shown here can be produced using injection moulding or using vacuum moulding. The top part 27 is provided with an opening 32 passing completely through it, whilst the bottom part 28 is provided with a blind opening 33. In use, an upright will be inserted through opening 32 and will bear on the bottom of opening 33.

It has been described above that the upright 4 is positioned either in accommodation 10 or in opening 33. This positioning can be effected directly, but it is also possible to fit a plastic sleeve between the upright 4 and the opening/accommodation concerned to provide a more uniform distribution of force and to increase the strength. Furthermore, it is possible to construct this sleeve as a clamping sleeve. That is to say, this sleeve is of conical construction such that as the clamping sleeve moves deeper into the opening/accommodation in the foot the internal diameter within which the upright is accommodated decreases. A clamping effect can be obtained in this way.

It will be understood that such a foot can be of lightweight construction so that the people using it are able to carry a number of such feet at the same time and to position them very accurately. A weight of approximately 3 kg for the foot and a diameter of approximately 50 cm are mentioned by way of example. It has been found that it is possible to produce such a foot in a simple manner by injection moulding or vacuum moulding using a simple mould.

Appreciable demands are imposed on the foot. Loads of 5,000 N can arise so that existing feet of other constructions, such as parasol feet, cannot be used.

If the rail system has to be demolished at a later stage, the foot is reusable or can be disposed of in an environmentally friendly manner. It is optionally possible to make the foot heavier by placing soil/sand or other ballast in the compartments delimited by the ribs 11 and 13.

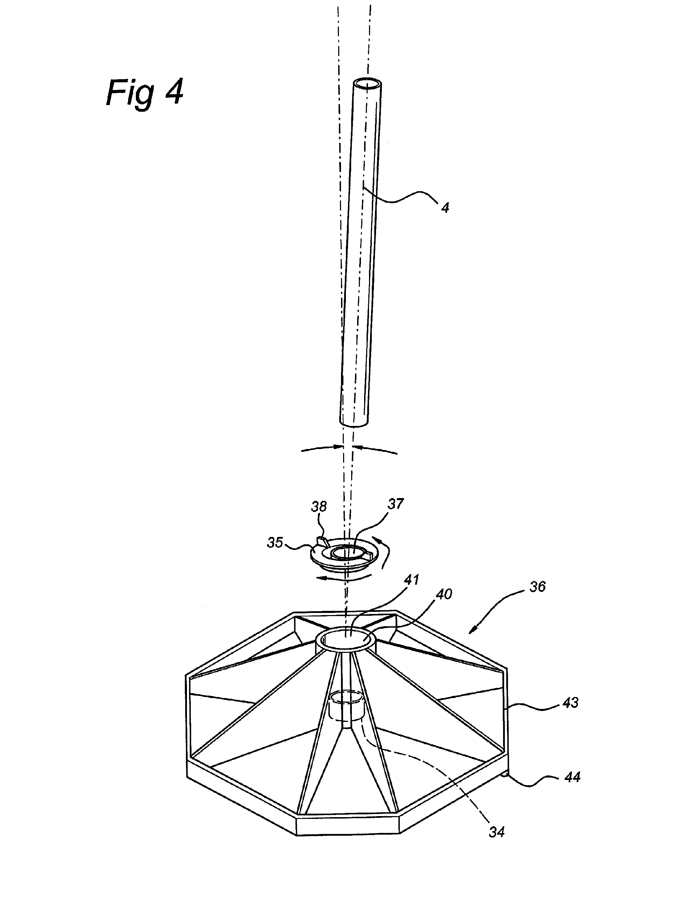

A further variant of the present invention is shown in Fig. 4. The foot is indicated in its entirety by 36 and the associated upright by 4. Accommodation 40 is provided at the bottom with a part of reduced diameter and stop edge that is indicated by 34. The upright 4 can be received therein with a tight fit. Optionally, part 34 can be provided with easily deformable radial ribs extending inwards, by means of which the upright 4 can be accommodated with a clamping fit.

According to a particular variant, part 34 can be omitted, as a result of which the upright 4 can be installed extending through the accommodation 40.

The opening of accommodation 40 is indicated by 41 close to the top and has a relatively large diameter. This opening is equipped to accommodate an adjusting ring 35 that is provided eccentrically with an opening 37 through which the upright 4 can be inserted with little play. Operating tabs 38 are present for turning part 35 with respect to opening 41. Teeth that interact with one another can optionally be present so as to lock the part 35 with respect to opening 41. With this construction it is possible to install the upright 4 in various, sloping positions with respect to the longitudinal axis of the accommodation 40, as a result of which it is possible to compensate for slight skewing.

In this example as well there is an upright peripheral rib 43 that is joined to radial ribs 41. Ballast, such as gravel, can be dumped into the "compartments" produced in this way. Moreover, a particularly rigid construction is produced in this way. The peripheral rib 43 is provided with a peripheral rib 44 extending below the support surface 42. By this means an elevated pressure is obtained locally and the position of the support can be additionally fixed with respect to the ground surface.

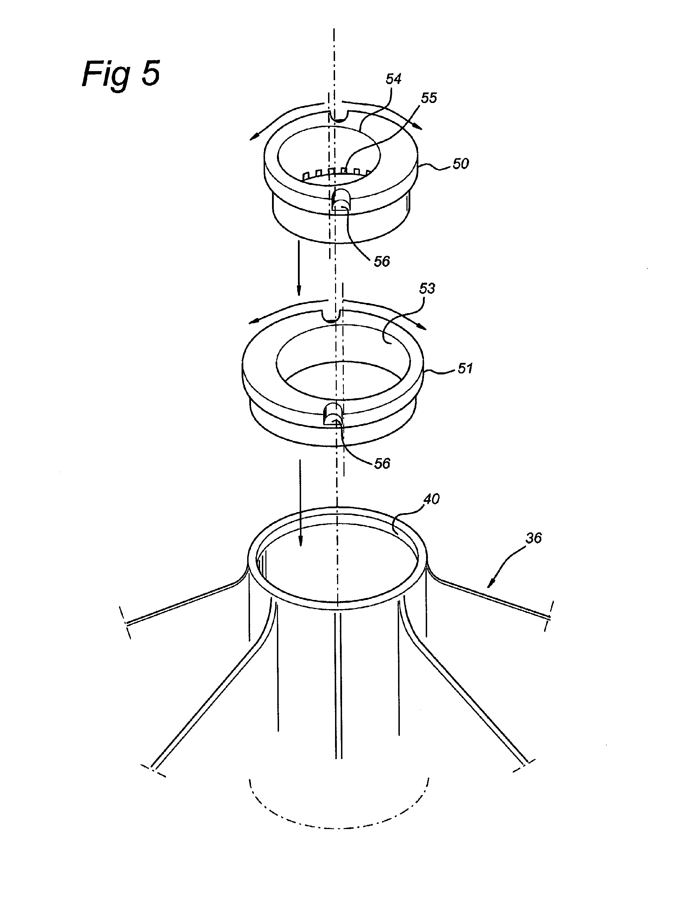

Fig. 5 shows a detail of a modified embodiment of the construction shown with reference to Fig. 4. The visible part of the foot is indicated by 36 and the accommodation by 40. In this case there are two adjusting rings, indicated by 50 and 51. With this arrangement adjusting ring 51 is so constructed that it can be turned in accommodation 40. This ring is provided with an eccentric hole 53 for receiving the exterior of adjusting ring 50. Adjusting ring 50 is provided with an eccentric opening 54 for accommodating the upright, which is not shown in more detail. The clamping ribs described above with reference to part 34 are indicated by 55. There are recesses 56 to provide for mutual adjustment of the two rings 50 and 51 with respect to one another and with respect to the foot 36. By turning the rings relative to one another it is possible, on the one hand, to determine the position of the eccentricity, but on the other hand, it is not necessary to move the foot. That is to say, if the upright only has to be moved to the "left" this is possible with this construction, whilst in the case of the construction shown in Fig. 4 a forwards or backwards shift will always take place. The upright can, of course, be moved by turning the foot, but this can be undesirable in some cases, when the construction according to Fig. 5 is advantageous. The adjusting rings and/or the associated openings can optionally be of somewhat conical construction, in order to provide a clamping action.

By means of the construction described above it is possible to save appreciable time when laying rail systems, stable and accurate support of the rails concerned nevertheless being obtained.

On reading the above description, variants which are obvious after the above description and fall within the scope of the appended claims will be immediately apparent to those skilled in the art.

## Claims

1. Rail system (1) for moving items such as roll containers along it, comprising a rail (2, 3) provided with a number of uniformly spaced supports, each support comprising an upright (4) and a plastic foot (6, 26), each upright being provided at one end with a support (7) for said rail and being provided at the other end with a connection to said foot, said foot being provided with an essentially flat bearing surface (12, 28) for engaging on a substrate and a central accommodation (10, 32, 33) for said upright, **characterised in that** said foot is provided with a peripheral rib (13) that in the use position extends essentially vertically upwards from said support surface.

2. Rail system according to Claim 1, wherein said foot is provided with a number of ribs (11) that extend from said central accommodation to the periphery of said foot and are essentially vertical in the use position.

3. Rail system according to Claim 2, wherein the height of said ribs (11) decreases from said central accommodation towards said periphery.

4. Rail system according to one of the preceding claims, wherein said accommodation is provided with an opening extending through said support surface.

5. Rail system according to Claim 4, wherein said upright (4) is provided with a height-adjustable stop surface (8, 9) for engagement with the boundary of said accommodation.

6. Rail system according to one of the preceding claims, installed in a greenhouse (5).

7. Rail system according to one of the preceding claims, comprising two parallel rails.

8. Rail system according to one of the preceding claims, wherein, in the non-loaded state, said support surface (12, 28) is made somewhat hollow such that on placing on a flat substrate the central part is some distance above said flat substrate.

9. Rail system according to one of the preceding claims, wherein said central accommodation is provided with adjustment means for said upright.

10. Rail system according to one of the preceding claims, wherein said support surface is provided with a protrusion that extends downwards in the use position.

11. Foot according to one of the preceding claims, to be used with a rail system for roll containers.
